# EUROPEAN PATENT SPECIFICATION

(11) **EP 4 424 572 B1**
(45) Date of publication and mention of the grant of the patent: **25.06.2025**
(21) Application number: 23159484.7
(22) Date of filing: 01.03.2023
(51) Int. Cl.: B62D 35/02, B62D 37/02

(54) **UNDERBODY PANEL AND VEHICLE WITH UNDERBODY PANEL**
UNTERBODENPLATTE UND FAHRZEUG MIT UNTERBODENPLATTE
PANNEAU DE SOUBASSEMENT ET VÉHICULE AVEC PANNEAU DE SOUBASSEMENT

(43) Date of publication of application: 04.09.2024
(73) Proprietor: Röchling Automotive SE, 68165 Mannheim (DE)
(72) Inventor: Petrisor, Catalin-Virgil, 67550 Worms (DE)
(74) Representative: Ullrich & Naumann PartG mbB

(56) References cited:
- DE-B4- 102011 085 933
- DE-U1- 202011 005 505
- JP-A- 2023 010 984

## Description

The present invention relates to an underbody panel for a motor vehicle, comprising an underbody fixed element, and an at least partially flexible trim moving element, wherein the trim moving element has a modulus of elasticity which is smaller than the modulus of elasticity of the underbody fixed element, and wherein the trim moving element is arranged movably relative to the underbody fixed part by means of an actuating device between at least two positions, a trim moving element starting position and at least one trim moving element operating position, wherein the trim moving element in the starting position is arranged substantially flush with the underbody fixed element, and wherein the trim moving element is arranged in the at least one trim moving element operating position protruding in at least one section from the underbody fixed element.

The present invention further relates to a vehicle with an underbody panel.

Although applicable to any kind of vehicle, the present invention will be described with regard to vehicles in form of cars.

Known underbody panels for cars may be used for influencing the air flow on the underside of the body, for instance to reduce the air resistance or to aerodynamically cover certain vehicle components.

For example, DE 20 2011 005 505 U1 discloses a vehicle with an underbody, wherein at least one fastening device is provided on the vehicle, which connects the underbody to a body element, and wherein the underbody by means of the fastening device is movably mounted on the vehicle body in relation to the vehicle body, and wherein the underbody can be deformed by means of at least one shaping device.

Another underbody panel is disclosed in DE 10 2011 085 933 B4. The underbody panel for a motor vehicle, with - considering a reference state in which the underbody panel is mounted on a motor vehicle - a fixed panel part fixed to the vehicle and a panel moving part that is movable relative to the fixed panel part, wherein the moving part can be lowered relative to the fixed part towards a roadway carrying the vehicle and back from a lowered position the fixed fairing part can be approached again, and wherein the moving part is movable relative to the fixed fairing part between a retracted position in which the fairing moving part is substantially flush with the fixed part, and an extended position in which the panel moving part is closer to the roadway than in the retracted position and wherein a gap between the moving part and the fixed is bridged at least in sections with a cover material covering the gap. The cover material comprises an elastic material with a lower modulus of elasticity than the material of the fixed part, which, during relative movement of the moving part, is stretched relative to the fixed part depending on the direction of movement against its material elasticity or contracts again due to its material elasticity. Also fixed to the vehicle is an actuator with a control unit integrated therein, which via an actuator link and an actuating rod articulated thereon and coupled to the moving part moves the moving part from a retracted position to an extended position and back. For this purpose, the actuator link can be rotated about an axis of rotation, such that the actuating rod moves vertically.

One of the disadvantages is however, that a large construction space, in particular in z- direction, i.e. vertical direction, is required. Another disadvantage is the complicated actuation requiring a large number of rotating elements for moving the moving part.

An objective of the present invention is therefore to provide an underbody panel with a movable part, which can be easier and more reliably moved between a starting position and an operating position. A further objective of the present invention is to provide an underbody panel with a movable part, which requires less construction space. An even further objective of the present invention is to provide an underbody panel with a flexible movable part, which can withstand damages. An even further objective of the present invention is to provide an alternative underbody panel and an alternative vehicle with an underbody panel.

In an embodiment, the present invention solves the above-mentioned objectives with an underbody panel for a motor vehicle, comprising
an underbody fixed element, and
an at least partially flexible trim moving element, wherein the trim moving element has a modulus of elasticity which is smaller than the modulus of elasticity of the underbody fixed element, and wherein
the trim moving element is arranged movably relative to the underbody fixed part by means of an actuating device between at least two positions, a trim moving element starting position and at least one trim moving element operating position, wherein
the trim moving element in the starting position is arranged substantially flush with the underbody fixed element, and wherein
the trim moving element is arranged in the at least one trim moving element operating position protruding in at least one section from the underbody fixed element, characterized in that
the actuating device comprises a drive and at least one actuating element connected to the drive, wherein the actuating element is movable between an actuating element starting position and at least one actuating element operating position, wherein the actuating element is connected to the trim moving element and the actuating element starting position corresponds to the trim moving element starting position and the at least one actuating element operating position corresponds to the at least one trim moving element operating position, wherein the actuating element in its actuating element starting position is at a greater distance from the drive than in its at least one actuating element operating position.

In an embodiment, the present invention provides a vehicle with an underbody panel according to any of claims 1-12.

One of the advantages that may be achieved is that the construction space in z-direction can be reduced. A further advantage that may be achieved is that a more reliable and easier actuation of the trim movable element can be provided. An even further advantage that may be achieved is that an easier controlling of the shape of the aerodynamic surface can be provided.

Further features, advantages and preferred embodiments are disclosed or may become apparent in the following.

According to a preferred embodiment, the trim moving element and/or the actuating element are guided on the underbody fixed element in at least one guide. This may provide a more reliable moving between the starting position and the at least one operating position.

According to a further preferred embodiment, at least two guides are arranged on the underbody fixed element, between which the actuating element is arranged slidably on the underbody fixed element, preferably centrally. This may further enhance the reliability of the movement of the trim moving element and may reduce operation faults.

According to a further preferred embodiment, the underbody fixed element has a recess for receiving the trim moving element, preferably flush with the surface. This may enable a flat surface of the outside of the underbody panel in its starting position. Further, the risk of damages to the trim moving element in its starting position is at least reduced.

According to a further preferred embodiment, the at least one actuating element has a carrier, which is centrally connected to a drive element of the drive. This may enable an easy actuation of the trim moving element.

According to a further preferred embodiment, the carrier is connected to the trim moving element via at least one web, in particular at least two webs, in particular wherein the at least one web is arranged on an axis of symmetry of the trim moving element, preferably wherein in the case of at least two webs, the at least two webs are arranged symmetrically with respect to the axis of symmetry of the trim moving element. This may enable a simple and reliable moving of the trim moving element along a defined direction.

According to a further preferred embodiment, the carrier is guided on both sides of the underbody fixed element. This may even further enhance the reliability of moving of the trim moving element between the starting position and at least one operating position.

According to a further preferred embodiment, the actuating device is arranged in a recess of the underbody fixed part. This may allow an easy installation and a reduced construction space of the underbody panel.

According to a further preferred embodiment, the trim moving element has at least two different thicknesses parallel to the direction between the starting position and the operating position. This may allow a defined and controlled shaping of the trim moving element.

According to a further preferred embodiment, the thickness of the trim moving element is between 1 mm and 10 mm, preferably between 2 mm and 5 mm, preferably between 2.5 mm and 3.5 mm. This may allow a flexible shaping while providing sufficient damage resistance.

According to a further preferred embodiment, the thickness of the trim moving element in the first half is larger than the thickness in the second half, wherein the second half of the trim moving element is closer to the starting position of the trim moving element. This may further enable a flexible shaping of the trim moving element while providing sufficient damage resistance in the front part.

According to a further preferred embodiment, the distance of the maximum protrusion of the trim moving element in an operating position measured perpendicular to the underbody fixed element is 0.01 mm or more, preferably 0.1 mm or more, preferably 1 mm or more, preferably 10 mm or more, preferably 25 mm or more, preferably 50 mm or more, preferably 55 mm, 60 mm and/or 65 mm and 500 mm or less, preferably 250 mm or less, preferably 150 mm or less, preferably 100 m or less, preferably 80 mm or less, preferably 75 mm or less, preferably 70 mm or less. This may enable a sufficient air guiding on the underside of a vehicle.

According to a further preferred embodiment, the underbody panel is arranged on the vehicle such that the at least one actuating element operating position is closer to a front axle of the vehicle than the actuator element starting position. This may enable a finer guiding or influence of the air flow of the underside of a vehicle.

According to a further preferred embodiment, the actuating device is configured such to move the trim moving element in an operating position depending on the velocity of the vehicle. This may enable a velocity dependent guiding of the air flow on the underside of a vehicle.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows an underbody panel with a trim moving element in starting position according to an embodiment of the present invention;
- Fig. 2: shows the underbody panel of Fig. 1 with a trim moving element in an operation position according to an embodiment of the present invention; and
- Fig. 3: shows a vehicle with an underbody panel of Fig. 1 with a trim moving element in an operation position according to an embodiment of the present invention.

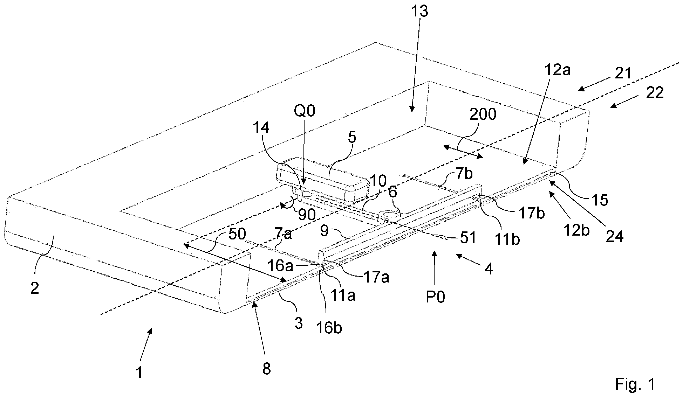

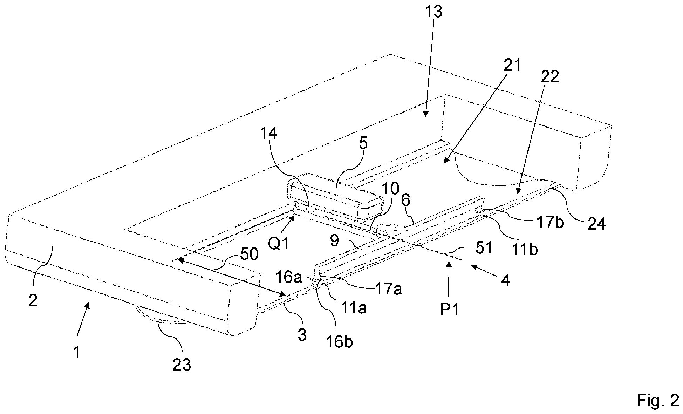

Figure 1 shows an underbody panel with a trim moving element in starting position according to an embodiment of the present invention and Figure 2 shows the underbody panel of Figure 1 with a trim moving element in an operation position according to an embodiment of the present invention.

In Figure 1, an underbody panel 1 is shown comprising a fixed element 2 and a flexible movable element 3, movable relative to the fixed element 2. The movable element 3 has different thicknesses along its moving direction 200. In its first half 21 the movable element 3 has a bigger thickness than in its second half 22. Of course, also other ratios than 50:50 as described before are possible for instance 10:90, 20:80, 30:70, 40:60, 60:40, 70:30, 80:20, 90:10 or the like. Even further, also more than two different thicknesses are possible, for instance a first thickness in the first quarter, a second thickness in the second quarter, a third thickness in the third quarter and a fourth thickness in the fourth quarter. The thickness profile may also be at least smooth in at least one section, wherein a section is determined along the moving direction. Further, also corresponding thickness profiles are also possible perpendicular to the moving direction 200 of the movable element 3.

For moving the movable element 3, which is shown flat in its starting position P0 in Figure 1, an actuator device 4 is shown. The actuator device 4, which is arranged on top of a bottom 15 of the fixed element 2 in a recess 13, comprises a drive 5 and a deflection element 14 connected to the drive 5. The deflection element 14 in turn is rotatably connected to an operating lever 10, which is rotatably connected or hinged - reference sign 6 - to a carrier 9 for the movable element 3. The carrier 9 has a T-shaped cross section in the plane of the bottom 15 of the fixed element 2 and a U-shaped cross section perpendicular to the plane of the movable element 3 in its starting position P0.

The carrier 9 is connected symmetrically - symmetry axis 51 - via at least two legs 17a, 17b to an end 24 of the movable element 3. In detail, the end 24 has a reinforcing edge to which said at least two legs 17a, 17b are connected. The two legs 17a, 17b are guided via webs 7a, 7b in the bottom 15 of the fixed element 2 along the moving direction 200. Further, each leg 17a, 17b comprises on both sides 12a, 12b of the bottom 15 protrusions 16a, 16b, such that the carrier 9 is also guided in the direction perpendicular to the plane of the bottom 15. Each leg 17a, 17b therefore has an H-shaped or double T-shaped cross section 11a, 11b at its end when looking parallel to the moving direction 200.

In its starting position P0 the movable element 3 is flat formed in a recess 8 on the underside 12b of a bottom 15 of the fixed element 2. The carrier 9 has then its greatest distance 50 to the drive 5 and the deflection element 14 is also in its starting position Q0. When actuating the drive 5, the deflection element 14 performs a rotation 90 around an axis perpendicular to the plane of the bottom 15 causing the deflection element 14 to move its articulation point to the drive element 10 on a circle. This causes the drive element 10 to drag the carrier 9 in the direction to the drive 5 such that the movable element 3 is bent and forms a protrusion 23 (see Figure 2) perpendicular to the plane of the bottom 15. For sake of better view, the bottom 15 of the fixed element 2 is not shown in Figure 2.

In its operating position P1 as shown in Figure 2, the deflection element 14 is rotated 180 degree. However, also intermediate operating positions between 0 degree and 180 degree are possible, for instance 30, 60, 90, 120, 150 degree or the like.

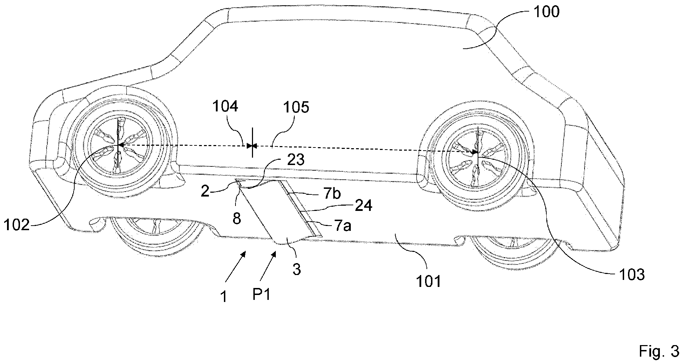

Figure 3 shows a vehicle with an underbody panel of Figure 1 with a trim moving element in an operation position according to an embodiment of the present invention.

In Figure 3 a vehicle 100 is shown having an underbody 101. In the underbody 101, an underbody panel 1 according to Figures 1 and 2 is provided. The underbody panel 1 is shown in its operating position P1 providing a vertical protrusion 23 by the movable element 3, which reduces the distance between the movable element 3 and the surface of a road (not shown). The underbody panel 1 is arranged in a closer distance 104, 105 to a front axle 102 than to a rear axle 103 of the vehicle. Other distances for arranging the underbody panel 1 on the underbody 101 of the vehicle 100 are possible.

At least one embodiment may provide at least one of the following features and/or at least one of the following advantages:
- Easy and less cost-intensive manufacturing.
- Reduced construction space, in particular in vertical direction.
- Reliable operation.
- Easy integration.
- Retrofittability.
- Resistance against damages from potential obstacles.
- Implementation of an aerodynamic soft surface that may enable controlling of the air flow under a vehicle.
- Slidable flexible element.
- Flexibility in terms of position of the underbody panel.
- Flexibility in terms of different operating positions of the movable element.

### List of reference signs

- 1: Underbody panel
- 2: Fixed element
- 3: Movable element
- 4: Actuator device
- 5: Drive
- 6: Hinged connection
- 7a, 7b: Web
- 8: Recess
- 9: Carrier
- 10: Operating lever
- 11a, 11b: H-shaped cross section
- 12a, 12b: Side
- 13: Recess
- 14: Deflection element
- 15: Bottom fixed element
- 16a, 16b: Protrusion
- 17a, 17b: Leg
- 21: First half movable element
- 22: Second half movable element
- 23: Protrusion
- 24: End of moving element
- 50: Distance
- 51: Axis of symmetry

- 90: Rotation/Vehicle
- 101: Underbody
- 102: Front axle
- 103: Rear axle
- 104, 105: Distance
- 200: Moving direction

- P0: Starting position moving element
- Q0: Starting position deflection element
- P1: Operating position moving element
- Q1: Operating position deflection element

## Claims

1. Underbody panel (1) for a motor vehicle (100), comprising
an underbody fixed element (2), and
an at least partially flexible trim moving element (3), wherein the trim moving element (3) has a modulus of elasticity which is smaller than the modulus of elasticity of the underbody fixed element (2), and wherein
the trim moving element (3) is arranged movably relative to the underbody fixed part (2) by means of an actuating device (4) between at least two positions, a trim moving element starting position (P0) and at least one trim moving element operating position (P1), wherein
the trim moving element (3) in the starting position (P1) is arranged substantially flush with the underbody fixed element (2), and wherein
the trim moving element (3) is arranged in the at least one trim moving element operating position (P1) protruding in at least one section from the underbody fixed element,
wherein the actuating device (4) comprises a drive (5) and at least one actuating element (9) connected to the drive (5), wherein the actuating element (9) is movable between an actuating element starting position (Q0) and at least one actuating element operating position (Q1) wherein the actuating element (9) is connected to the trim moving element (3) and the actuating element starting position (Q0) corresponds to the trim moving element starting position (P0) and the at least one actuating element operating position (Q1) corresponds to the at least one trim moving element operating position (P1), **characterized in that**
the actuating element (9) in its actuating element starting position (Q0) is at a greater distance (50) from the drive (5) than in its at least one actuating element operating position (Q1).

2. Underbody panel (1) according to claim 1, **characterized in that** the trim moving element (3) and/or the actuating element (9) are guided on the underbody fixed element (2) in at least one guide (7a, 7b).

3. Underbody panel (1) according to claim 2, **characterized in that** at least two guides (7a, 7b) are arranged on the underbody fixed element (2), between which the actuating element (9) is arranged slidably on the underbody fixed element (2), preferably centrally.

4. Underbody panel (1) according to one of claims 1-3, **characterized in that** the underbody fixed element (2) has a recess (8) for receiving the trim moving element (3), preferably flush with the surface.

5. Underbody panel (1) according to any one of claims 1-4, **characterized in that** the at least one actuating element (9) has a carrier (9), which is centrally connected to a drive element (10) of the drive (5).

6. Underbody panel (1) according to claim 5, **characterized in that** the carrier (9) is connected to the trim moving element (3) via at least one web (11a, 11b), in particular at least two webs (11a, 11b), in particular wherein the at least one web (11a, 11b) is arranged on an axis of symmetry (51) of the trim moving element (3), preferably wherein in the case of at least two webs (11a, 11b), the at least two webs (11a, 11b) are arranged symmetrically with respect to the axis of symmetry (51) of the trim moving element (3).

7. Underbody panel (1) according to claim 5 or 6, **characterized in that** the carrier (9) is guided on both sides (12a, 12b) of the underbody fixed element (2).

8. Underbody panel (1) according to one of claims 1-7, **characterized in that** the actuating device (4) is arranged in a recess (13) of the underbody fixed part (2).

9. Underbody panel (1) according to one of the claims 1-8, **characterized in that** the trim moving element (3) has at least two different thicknesses parallel to the direction between the starting position (P0) and the operating position (P1).

10. Underbody panel (1) according to claim 9, **characterized in that** the thickness of the trim moving element (3) is between 1 mm and 10 mm, preferably between 2 mm and 5 mm, preferably between 2.5 mm and 3.5 mm.

11. Underbody panel (1) according to claim 9 or 10, **characterized in that** the thickness of the trim moving element (3) in the first half (21) is larger than the thickness in the second half (22), wherein the second half (22) of the trim moving element (3) is closer to the starting position (P0) of the trim moving element (3).

12. Underbody panel (1) according to one of the claims 1-11, **characterized in that** the distance of the maximum protrusion (23) of the trim moving element (3) in an operating position (P1) measured perpendicular to the underbody fixed element (2) is 0.01 mm or more, preferably 0.1 mm or more, preferably 1 mm or more, preferably 10 mm or more, preferably 25 mm or more, preferably 50 mm or more, preferably 55 mm, 60 mm and/or 65 mm and
500 mm or less, preferably 250 mm or less, preferably 150 mm or less, preferably 100 m or less, preferably 80 mm or less, preferably 75 mm or less, preferably 70 mm or less.

13. Vehicle (100) with an underbody panel (1) according to any of claims 1-12.

14. Vehicle (100) according to claim 13, **characterized in that** the underbody panel (1) is arranged on the vehicle (100) such that the at least one actuating element operating position (Q1) is closer to a front axle (102) of the vehicle (100) than the actuator element starting position (Q0).

15. Vehicle (100) according to one of the claims 13-14, **characterized in that** the actuating device (4) is configured such to move the trim moving element (3) in an operating position (P1) depending on the velocity of the vehicle (100).

## Patentansprüche

1. Unterbodenverkleidung (1) für ein Kraftfahrzeug (100), umfassend ein festes Unterbodenelement (2), und
ein zumindest teilweise flexibles Verkleidungsbewegteil (3), wobei das Verkleidungsbewegteil (3) ein Elastizitätsmodul aufweist, welches kleiner ist als das Elastizitätsmodul des festen Unterbodenelements (2), und wobei
das Verkleidungsbewegteil (3) mittels einer Betätigungseinrichtung (4) zwischen zumindest zwei Positionen, einer Verkleidungsbewegteil-Ausgangsposition (P0) und zumindest einer Verkleidungsbewegteil-Betriebsposition (P1), relativ zu dem festen Unterbodenelement (2) beweglich angeordnet ist, wobei
das Verkleidungsbewegteil (3) in der Ausgangsposition (P1) im Wesentlichen bündig mit dem festen Unterbodenelement (2) angeordnet ist, und wobei
das Verkleidungsbewegteil (3) in der zumindest einen Verkleidungsbewegteil-Betriebsposition (P1) in zumindest einem Abschnitt aus dem festen Unterbodenelement hervorstehend angeordnet ist, wobei
die Betätigungsvorrichtung (4) einen Antrieb (5) und zumindest ein mit dem Antrieb (5) verbundenes Betätigungselement (9) umfasst, wobei das Betätigungselement (9) zwischen einer Betätigungselement-Ausgangsposition (Q0) und zumindest einer Betätigungselement-Betriebsposition (Q1) bewegbar ist, wobei das Betätigungselement (9) mit dem Verkleidungsbewegteil (3) verbunden ist und die Betätigungselement-Ausgangsposition (Q0) mit der Verkleidungsbewegteil-Ausgangsposition (P0) und die zumindest eine Betätigungselement-Betriebsposition (Q1) mit der zumindest einen Verkleidungsbewegteil-Betriebsposition (P1) korrespondiert,
**dadurch gekennzeichnet, dass** das Betätigungselement (9) in seiner Betätigungselement-Ausgangsposition (Q0) einen größeren Abstand (50) zum Antrieb (5) aufweist als in seiner zumindest einen Betätigungselement-Betriebsposition (Q1).

2. Unterbodenverkleidung (1) nach Anspruch 1, **dadurch gekennzeichnet, dass** das Verkleidungsbewegteil (3) und/oder das Betätigungselement (9) an dem festen Unterbodenelement (2) in zumindest einer Führung (7a, 7b) geführt angeordnet sind.

3. Unterbodenverkleidung (1) nach Anspruch 2, **dadurch gekennzeichnet, dass** am festen Unterbodenelement (2) zumindest zwei Führungen (7a, 7b) angeordnet sind, zwischen denen das Betätigungselement (9) verschieblich am festen Unterbodenelement (2), vorzugsweise mittig, angeordnet ist.

4. Unterbodenverkleidung (1) nach einem der Ansprüche 1-3, **dadurch gekennzeichnet, dass** das feste Unterbodenelement (2) eine, vorzugsweise flächenbündige, Aussparung (8) zur Aufnahme des Verkleidungsbewegteils (3) aufweist.

5. Unterbodenverkleidung (1) nach einem der Ansprüche 1-4, **dadurch gekennzeichnet, dass** das zumindest eine Betätigungselement (9) einen Träger (9) aufweist, der mittig mit einem Antriebselement (10) des Antriebs (5) verbunden ist.

6. Unterbodenverkleidung (1) nach Anspruch 5, **dadurch gekennzeichnet, dass** der Träger (9) über zumindest einen Steg (11a, 11b), insbesondere zumindest zwei Stege (11a, 11b), mit dem Verkleidungsbewegteil (3) verbunden ist, insbesondere wobei der zumindest eine Steg (11a, 11b) auf einer Symmetrieachse (51) des Verkleidungsbewegteils (3) angeordnet ist, vorzugsweise wobei im Falle von zumindest zwei Stegen (11a, 11b) die zumindest zwei Stege (11a, 11b) symmetrisch zur Symmetrieachse (51) des Verkleidungsbewegteils (3) angeordnet sind.

7. Unterbodenverkleidung (1) nach Anspruch 5 oder 6, **dadurch gekennzeichnet, dass** der Träger (9) auf beiden Seiten (12a, 12b) des festen Unterbodenelements (2) geführt ist.

8. Unterbodenverkleidung (1) nach einem der Ansprüche 1-7, **dadurch gekennzeichnet, dass** die Betätigungseinrichtung (4) in einer Aussparung (13) des festen Unterbodenelements (2) angeordnet ist.

9. Unterbodenverkleidung (1) nach einem der Ansprüche 1-8, **dadurch gekennzeichnet, dass** das Verkleidungsbewegteil (3) parallel zur Richtung zwischen der Ausgangsposition (P0) und der Betriebsposition (P1) zumindest zwei unterschiedliche Dicken aufweist.

10. Unterbodenverkleidung (1) nach Anspruch 9, **dadurch gekennzeichnet, dass** die Dicke des Verkleidungsbewegteils (3) zwischen 1 mm und 10 mm, vorzugsweise zwischen 2 mm und 5 mm, vorzugsweise zwischen 2,5 mm und 3,5 mm, beträgt.

11. Unterbodenverkleidung (1) nach Anspruch 9 oder 10, **dadurch gekennzeichnet, dass** die Dicke des Verkleidungsbewegteils (3) in der ersten Hälfte (21) größer ist als die Dicke in der zweiten Hälfte (22), wobei die zweite Hälfte (22) des Verkleidungsbewegteils (3) näher an der Ausgangsposition (P0) des Verkleidungsbewegteils (3) liegt.

12. Unterbodenverkleidung (1) nach einem der Ansprüche 1-11, **dadurch gekennzeichnet, dass** der Abstand des maximalen Überstandes (23) des Verkleidungsbewegteils (3) in einer senkrecht zum festen Unterbodenelement (2) gemessenen Betriebsposition (P1) 0,01 mm oder mehr, vorzugsweise 0,1 mm oder mehr, vorzugsweise 1 mm oder mehr, vorzugsweise 10 mm oder mehr, vorzugsweise 25 mm oder mehr, vorzugsweise 50 mm oder mehr, vorzugsweise 55 mm, 60 mm und/oder 65 mm beträgt und 500 mm oder weniger, vorzugsweise 250 mm oder weniger, vorzugsweise 150 mm oder weniger, vorzugsweise 100 mm oder weniger, vorzugsweise 80 mm oder weniger, vorzugsweise 75 mm oder weniger, vorzugsweise 70 mm oder weniger.

13. Fahrzeug (100) mit einer Unterbodenverkleidung (1) nach einem der Ansprüche 1 bis 12.

14. Fahrzeug (100) nach Anspruch 13, **dadurch gekennzeichnet, dass** die Unterbodenverkleidung (1) derart am Fahrzeug (100) angeordnet ist, dass die zumindest eine Betätigungselement-Betriebsposition (Q1) näher an einer Vorderachse (102) des Fahrzeugs (100) liegt als die Betätigungselement-Ausgangsposition (Q0).

15. Fahrzeug (100) nach einem der Ansprüche 13-14, **dadurch gekennzeichnet, dass** die Betätigungseinrichtung (4) so ausgebildet ist, dass sie das Verkleidungsbewegteil (3) in Abhängigkeit von der Geschwindigkeit des Fahrzeugs (100) in eine Betriebsposition (P1) bewegt.

## Revendications

1. Panneau de soubassement (1) destiné à un véhicule à moteur (100), comprenant :
un élément fixe de soubassement (2), et
un élément mobile de garniture au moins partiellement flexible (3), dans lequel l'élément mobile de garniture (3) présente un module d'élasticité qui est inférieur au module d'élasticité de l'élément fixe de soubassement (2), et dans lequel
l'élément mobile de garniture (3) est prévu de manière mobile par rapport à la partie fixe de soubassement (2) à l'aide d'un dispositif d'actionnement (4) entre au moins deux positions, une position de démarrage d'élément mobile de garniture (P0) et au moins une position de fonctionnement d'élément mobile de garniture (P1), dans lequel
l'élément mobile de garniture (3) dans la position de démarrage (P1) est prévu sensiblement au même niveau que l'élément fixe de soubassement (2), et dans lequel
l'élément mobile de garniture (3) est prévu dans l'au moins une position de fonctionnement (P1) d'élément mobile de garniture qui fait saillie dans au moins une section par rapport à l'élément fixe de soubassement,
dans lequel le dispositif d'actionnement (4) comprend un entraînement (5) et au moins un élément d'actionnement (9) relié à l'entraînement (5), dans lequel l'élément d'actionnement (9) est mobile entre une position de démarrage d'élément d'actionnement (Q0) et au moins une position de fonctionnement d'élément d'actionnement (Q1), dans lequel l'élément d'actionnement (9) est relié à l'élément mobile de garniture (3) et la position de démarrage d'élément d'actionnement (Q0) correspond à la position de démarrage d'élément mobile de garniture (P0) et l'au moins une position de fonctionnement d'élément d'actionnement (Q1) correspond à l'au moins une position de fonctionnement d'élément mobile de garniture (P1), **caractérisé en ce que**
l'élément d'actionnement (9), dans sa position de démarrage d'élément d'actionnement (Q0), se trouve à une plus grande distance (50) de l'entraînement (5) que dans sa au moins une position de fonctionnement d'élément d'actionnement (Q1).

2. Panneau de soubassement (1) selon la revendication 1, **caractérisé en ce que** l'élément mobile de garniture (3) et/ou l'élément d'actionnement (9) sont guidés sur l'élément fixe de soubassement (2) dans au moins un guide (7a, 7b).

3. Panneau de soubassement (1) selon la revendication 2, **caractérisé en ce qu'**au moins deux guides (7a, 7b) sont prévus sur l'élément fixe de soubassement (2), entre lesquels l'élément d'actionnement (9) est prévu de manière coulissante sur l'élément fixe de soubassement (2), de préférence de manière centrale.

4. Panneau de soubassement (1) selon l'une des revendications 1 à 3, **caractérisé en ce que** l'élément fixe de soubassement (2) possède un renfoncement (8) destiné à recevoir l'élément mobile de garniture (3), de préférence au même niveau que la surface.

5. Panneau de soubassement (1) selon l'une quelconque des revendications 1 à 4, **caractérisé en ce que** l'au moins un élément d'actionnement (9) possède un support (9), qui est relié de manière centrale à un élément d'entraînement (10) de l'entraînement (5).

6. Panneau de soubassement (1) selon la revendication 5, **caractérisé en ce que** le support (9) est relié à l'élément mobile de garniture (3) via au moins une bande (11a, 11b), en particulier au moins deux bandes (11a, 11b), dans lequel, en particulier, l'au moins une bande (11a, 11b) est prévue sur un axe de symétrie (51) de l'élément mobile de garniture (3), dans lequel, de préférence, dans le cas d'au moins deux bandes (11a, 11b), les au moins deux bandes (11a, 11b) sont prévues symétriquement par rapport à l'axe de symétrie (51) de l'élément mobile de garniture (3).

7. Panneau de soubassement (1) selon la revendication 5 ou 6, **caractérisé en ce que** le support (9) est guidé des deux côtés (12a, 12b) de l'élément fixe de soubassement (2).

8. Panneau de soubassement (1) selon l'une des revendications 1 à 7, **caractérisé en ce que** le dispositif d'actionnement (4) est prévu dans un renfoncement (13) de la partie fixe de soubassement (2).

9. Panneau de soubassement (1) selon l'une des revendications 1 à 8, **caractérisé en ce que** l'élément mobile de garniture (3) présente au moins deux épaisseurs différentes parallèles à la direction entre la position de démarrage (P0) et la position de fonctionnement (P1).

10. Panneau de soubassement (1) selon la revendication 9, **caractérisé en ce que** l'épaisseur de l'élément mobile de garniture (3) est comprise entre 1 mm et 10 mm, de préférence entre 2 mm et 5 mm, de préférence entre 2,5 mm et 3,5 mm.

11. Panneau de soubassement (1) selon la revendication 9 ou 10, **caractérisé en ce que** l'épaisseur de l'élément mobile de garniture (3) dans la première moitié (21) est supérieure à l'épaisseur dans la deuxième moitié (22), dans lequel la deuxième moitié (22) de l'élément mobile de garniture (3) est plus proche de la position de démarrage (P0) de l'élément mobile de garniture (3).

12. Panneau de soubassement (1) selon l'une des revendications 1 à 11, **caractérisé en ce que** la distance de la saillie maximale (23) de l'élément mobile de garniture (3) dans une position de fonctionnement (P1) mesurée perpendiculairement à l'élément fixe de soubassement (2) est de 0,01 mm ou plus, de préférence de 0,1 mm ou plus, de préférence de 1 mm ou plus, de préférence de 10 mm ou plus, de préférence de 25 mm ou plus, de préférence de 50 mm ou plus, de préférence de 55 mm, de 60 mm et/ou de 65 mm, et de 500 mm ou moins, de préférence de 250 mm ou moins, de préférence de 150 mm ou moins, de préférence de 100 mm ou moins, de préférence de 80 mm ou moins, de préférence de 75 mm ou moins, de préférence de 70 mm ou moins.

13. Véhicule (100) équipé d'un panneau de soubassement (1) selon l'une quelconque des revendications 1 à 12.

14. Véhicule (100) selon la revendication 13, **caractérisé en ce que** le panneau de soubassement (1) est prévu sur le véhicule (100) de sorte que l'au moins une position de fonctionnement d'élément d'actionnement (Q1) soit plus proche d'un essieu avant (102) du véhicule (100) que la position de démarrage d'élément d'actionnement (Q0).

15. Véhicule (100) selon l'une des revendications 13 à 14, **caractérisé en ce que** le dispositif d'actionnement (4) est configuré de façon à déplacer l'élément mobile de garniture (3) dans une position de fonctionnement (P1) selon la vitesse du véhicule (100).
